# EUROPEAN PATENT APPLICATION

(11) **EP 2 876 145 A1**
(43) Date of publication of application: **27.05.2015**
(21) Application number: 13306613.4
(22) Date of filing: 26.11.2013
(51) Int. Cl.: C09K 8/467

(54) **Compositions and methods for improving the toughnes of set cements**

(71) Applicant: Services Pétroliers Schlumberger, 75007 Paris (FR); Schlumberger Technology B.V., 2514 JG The Hague (NL); Schlumberger Holdings Limited, 1110 Tortola (VG)
(72) Inventor: James, Simon Gareth, 92142 Clamart Cedex (FR)
(74) Representative: Ford, Michael Frederick

(57) **Abstract**

The fracture toughness of set cement may be enhanced by incorporating at least two silicas in the slurry formulation. Each silica has a different particle size distribution. The cement is selected from materials that form calcium silicate hydrates upon exposure to water, including Portland cement, fly ash, blast furnace slag, lime/silica mixtures or zeolites or combinations thereof.

## Description

### BACKGROUND

The statements in this section merely provide background information related to the present disclosure and may not constitute prior art.

This disclosure relates to methods for improving the toughness of zonal isolation materials, set cements in particular. For this disclosure, toughness will be defined as the ability of a material to absorb energy and plastically deform without fracturing. Thus, the higher the strain a material can withstand without breaking, the tougher it will be.

Set cements that are tough are particularly desirable in the context of well cementing. In general, a well that is more than a few hundreds of meters deep is cased, and the annular space between the underground formation and the casing is cemented over all or part of its depth. The essential function of cementing is to prevent fluid exchange between the different formation layers through which the borehole passes and to control the entry of fluids into the well, in particular to limit the entry of water and gas. In production zones, the casing, the cement and the formation are all perforated, typically by the use of explosive perforating charges, over a few meters.

The cement positioned in the annular space in a well is subjected to a number of stresses throughout the well's lifetime. The pressure inside the casing can increase or decrease as the nature of the fluids therein changes, or when additional pressure is applied within-for example during a stimulation operation. Such pressure changes may cause the casing to expand or contract, thereby exerting stress on the cement sheath.

Temperature changes also exert stress on the casing, which in turn affects the cement sheath. Such temperature changes may arise owing to cement hydration and the pumping of fluids into the well whose temperatures are significantly different from those in the wellbore.

Mechanical shocks may be exerted by perforating operations. Perforating may not only causes an overpressure of several hundred bars inside the well, but the energy also dissipates in the form of a shock wave. Perforating also disturbs the cement when the charge penetrates the cement sheath and subjects the zone surrounding the borehole to large forces extending several meters into the formation.

Another process that creates dynamic stresses in the cement sheath is when a window is cut through a cemented casing to create a sidetrack. Milling the steel over a depth of several meters followed by drilling a sidetrack subjects the cement to shock and vibration, which may cause irreversible damage.

Over the course of a well's productive life, and after abandonment, seismic events may disturb the borehole and the cement sheath, potentially disrupting the cement sheath and causing the loss of zonal isolation.

The well cementing industry has responded to these challenges by developing cement systems with improved flexibility. Such cement systems may have lower densities than conventional cements, or they may contain fibers, flexible particles or both. They generally have lower Young's moduli than conventional cements. A review of these systems is presented in the following publication. Nelson EB, Drochon B, Michaux M and Griffin TJ: "Special Cement Systems," in Nelson EB and Guillot D

(eds.): *Well Cementing-2nd Edition,* Schlumberger, Houston (2006) 233-268.

Despite the valuable contributions offered by these technologies, the industry perceives the need for even more durable cement systems. The need is particularly related to ensuring that the cement sheath maintains zonal isolation during and after hydraulic fracturing operations.

### SUMMARY

In an aspect, embodiments relate to methods for increasing set cement fracture toughness. A slurry is provided that comprises water, an inorganic cement, a first silica and a second silica. The slurry is exposed to a temperature higher than 110°C, and allowed to set and harden.

In a further aspect, embodiments relate to methods for cementing a subterranean well. A slurry is provided that comprises water, an inorganic cement, a first silica and a second silica, wherein the slurry has a density higher than or equal to 1700 kg/m³. The slurry is placed in the well, wherein the slurry is exposed to a temperature higher than 110°C, and allowed to set and harden.

### BRIEF DESCRIPTION OF THE DRAWINGS

Figure 1 shows the particle size distribution of materials employed during experiments described in the Examples.
Figure 2 is a plot showing the fracture toughness of cement systems cured at 200°C for one week.
Figure 3 is a plot showing the fracture toughness of cement systems cured at 200°C for three months.

### DETAILED DESCRIPTION

At the outset, it should be noted that in the development of any such actual embodiment, numerous implementation-specific decisions must be made to achieve the developer's specific goals, such as compliance with system related and business related constraints, which will vary from one implementation to another. Moreover, it will be appreciated that such a development effort might be complex and time consuming but would nevertheless be a routine undertaking for those of ordinary skill in the art having the benefit of this disclosure. The description and examples are presented solely for the purpose of illustrating the preferred embodiments and should not be construed as a limitation to the scope and applicability of the disclosed embodiments. While the compositions of the present disclosure are described herein as comprising certain materials, it should be understood that the composition could optionally comprise two or more chemically different materials. In addition, the composition can also comprise some components other than the ones already cited.

The Applicant has surprisingly discovered that set cements with improved toughness may be obtained by preparing cement slurries that incorporate silica in at least two distinct particle-size distributions.

In an aspect, embodiments relate to methods for increasing set cement fracture toughness. A slurry is provided that comprises water, an inorganic cement, a first silica and a second silica. The slurry is exposed to a temperature higher than 110°C, and allowed to set and harden.

In a further aspect, embodiments relate to methods for cementing a subterranean well. A slurry is provided that comprises water, an inorganic cement, a first silica and a second silica, wherein the slurry has a density higher than or equal to 1700 kg/m³. The slurry is placed in the well, wherein the slurry is exposed to a temperature higher than 110°C, and allowed to set and harden.

For both aspects, the inorganic cement may comprise materials that form calcium silicate hydrates in the presence of water. Such cements may comprise Portland cement, fly ash, blast furnace slag, lime/silica mixtures or zeolites or combinations thereof.

For both aspects, the first silica may have a mean particle size (d₅₀) between 1 micron and 10 microns, and may be present at a concentration between 5% and 50% by weight of cement (BWOC). The first silica may be present at a concentration between 35% and 50% (BWOC). The second silica may have a mean particle size between 50 microns and 500 microns, and may be present at a concentration between 30% and 100% BWOC. The slurries may have a solid volume fraction (SVF) between 40% and 60%.

For both aspects, upon setting, the slurry may have a tensile strength between 2 MPa and 10 MPa, and an unconfined compressive strength (UCS) between 20 MPa and 120 MPa. The set-cement fracture toughness may vary between 0.5 and 1.5 MPa m^{0.5}

For both aspects, the slurry may further comprise weighting materials. The weighting materials may comprise barite, ilmenite, hematite or manganese tetraoxide or combinations thereof.

The following examples serve to further illustrate the disclosure.

### EXAMPLES

In the examples, set cement fracture toughness was measured according to the "scratch test" procedure documented in the following publication. Ulm F-J and James S: "The Scratch Test for Strength and Fracture Toughness Determination of Oil Well Cements Cured at High Temperature and Pressure," Cement and Concrete Research 41 (2011) 942-946.

### EXAMPLE 1

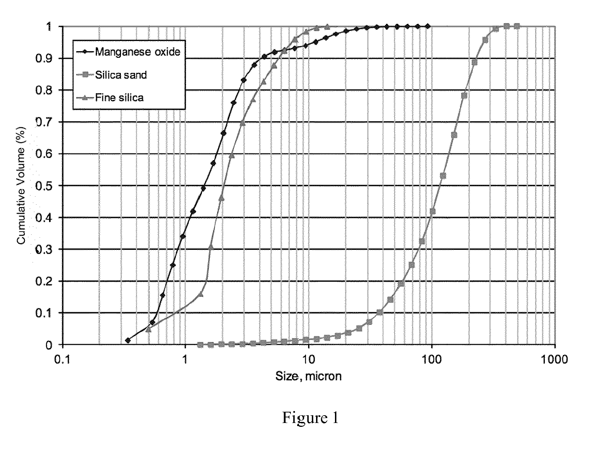

Three high SVF cement systems were prepared, and their compositions are presented in Table 1. The systems were formulated with Class G cement, fine silica or manganese tetraoxide, and coarse silica. The additive concentrations are presented as percent by volume of blend (BVOB). The typical particle size distributions of these materials are shown in Fig. 1. The three systems had the same SVF-59%.

| System | **A** | **B** | **C** |
|---|---|---|---|
| SVF | 59% | 59% | 59% |
| Density (kg m⁻³) | 2090 | 2090 | 2280 |
| | | | |
| Class G cement | 35% (BVOB) | 35% (BVOB) | 35% (BVOB) |
| Coarse silica | 50% (BVOB) | 40%(BVOB) | 50% (BVOB) |
| | 117% (BWOC)* | 93% (BWOC) | 117%(BWOC) |
| Fine silica | 15% (BVOB) | 25% (BVOB) | - |
| | 35% (BWOC) | 58% (BWOC) | |
| Manganese oxide | - | - | 15% (BVOB) |

| | | | |
|---|---|---|---|
| Table 1. Cement slurry compositions. *BWOC = by weight of cement | | | |

The cement slurry designs were optimized to ensure that there was zero free fluid and no solids sedimentation, and the slurries were homogeneous. The three systems were cured at 200°C for periods between 1 week and 3 months. Scratch tests were performed at the end of each curing period.

The results, shown in Table 2, indicate that the B system achieved the highest fracture toughness within one week-81% higher than the base system A. The base system A achieved 6% higher fracture toughness than C, which did not contain silica in two particle-size ranges. After 3 months the system B fracture toughness was 45% higher than that of system A.

**Table 2. Fracture toughness versus time for three cement compositions cured at 200°C.**

| System | Fracture Toughness (MPa.m^{0.5}) | | |
|---|---|---|---|
| | 1 week | 1 month | 3 months |
| A | 0.37 | - | 0.47 |
| B | 0.67 | 0.67 | 0.68 |
| C | 0.35 | 0.42 | 0.4 |

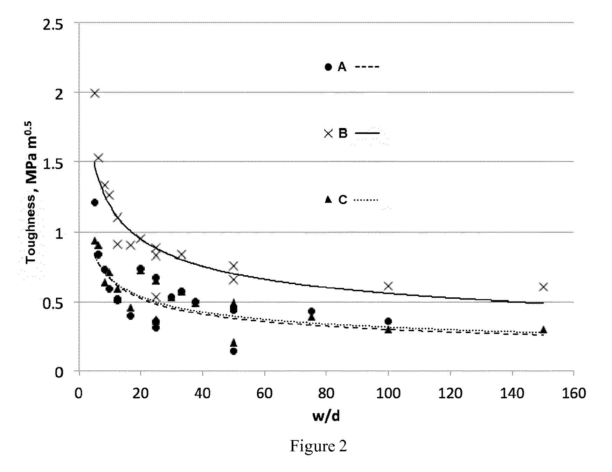

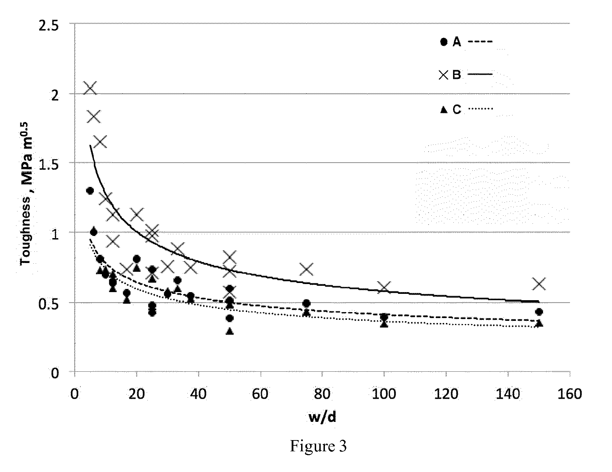

The fracture toughness data measured with respect to the width/depth (w/d) ratio employed during scratch testing are presented in Figs. 2 and 3. In these figures the points are measured values and the lines are power law fits to the data. Fig. 2 shows data recorded after 1 week of curing, and the data in Fig. 3 are from measurements performed after 3 months curing. In both cases, system B was the best performer.

### EXAMPLE 2

The cement systems described in Table 2 were cured for one week at 150°C. Scratch tests were performed on the samples. The results are shown in Table 3. System A had 34% higher fracture toughness than system C, which did not contain silica in two particle size ranges. System B had a 35% higher toughness than system A.

**Table 3. Fracture toughness versus time for three cement compositions cured at 150°C.**

| System | Fracture Toughness (MPa.m^{0.5}) |
|---|---|
| | 1 week |
| A | 0.71 |
| B | 0.96 |
| c | 0.53 |

Although only a few example embodiments have been described in detail above, those skilled in the art will readily appreciate that many modifications are possible in the example embodiments without materially departing from this invention. Accordingly, all such modifications are intended to be included within the scope of this disclosure as defined in the following claims.

## Claims

1. A method for increasing set cement fracture toughness, comprising
(i) providing a slurry comprising water, an inorganic cement, a first silica and a second silica;
(ii) exposing the slurry to a temperature higher than 110°C; and
(iii) allowing the slurry to set and harden,
wherein the slurry has a density higher than or equal to 1700 kg/m³.

2. The method of claim 1, wherein the first silica has a mean particle size between 1 micron and 10 microns, and is present at a concentration between 5% and 50% by weight of cement.

3. The method of claim 1 or 2, wherein the second silica has a mean particle size between 50 microns and 500 microns, and is present at a concentration between 30% and 100% by weight of cement.

4. The method of any one of claims 1-3, wherein the slurry has a solid volume fraction between 40% and 60%.

5. The method of any one of claims 1-4, wherein the slurry has a tensile strength between 2 MPa and 10 MPa, and an unconfined compressive strength between 20 MPa and 120 MPa after setting.

6. The method of any one of claims 1-5, wherein the set cement fracture toughness is between 0.5 and 1.5 MPa.m^{0.5}

7. The method of any one of claims 1-6, wherein the inorganic cement comprises Portland cement, fly ash, blast furnace slag, lime/silica mixtures or zeolites or combinations thereof.

8. The method of any one of claims 1-7, wherein the slurry further comprises barite, ilmenite, hematite or manganese tetraoxide or combinations thereof.

9. A method for cementing a subterranean well, comprising:
(i) providing a slurry comprising water, an inorganic cement, a first silica and a second silica, wherein the slurry has a density higher than or equal to 2000 kg/m³;
(ii) placing the slurry in the well, wherein the slurry is exposed to a temperature higher than 110°C; and
(iii) allowing the slurry to set and harden.

10. The method of claim 9, wherein the first silica has a mean particle size between 1 micron and 10 microns, and is present at a concentration between 5% and 50% by weight of cement.

11. The method of claim 9 or 10, wherein the second silica has a mean particle size between 50 microns and 500 microns, and is present at a concentration between 30% and 100% by weight of cement.

12. The method of any one of claims 9-11, wherein the slurry has a solid volume fraction between 40% and 60%.

13. The method of any one of claims 9-12, wherein the slurry has a tensile strength between 2 MPa and 10 MPa, and an unconfined compressive strength between 20 MPa and 120 MPa after setting.

14. The method of any one of claims 9-13, wherein the set cement fracture toughness is between 0.5 and 1.5 MPa.m^{0.5}.

15. The method of any one of claims 9-14, wherein the inorganic cement comprises Portland cement, fly ash, blast furnace slag, lime/silica mixtures or zeolites or combinations thereof.
